# FASCICULE DE BREVET EUROPEEN

(11) **EP 3 827 187 B1**
(45) Date de publication et mention de la délivrance du brevet: **03.05.2023**
(21) Numéro de dépôt: 19734254.6
(22) Date de dépôt: 04.06.2019
(51) Int. Cl.: F16H 63/30

(54) **DISPOSITIF DE DETECTION DE POSITIONS D'UNE COMMANDE INTERNE DE BOITE DE VITESSES**
VORRICHTUNG ZUR ERFASSUNG DER POSITIONEN EINER INTERNEN STEUERUNGSVORRICHTUNG FÜR EIN GETRIEBE
DEVICE FOR DETECTING THE POSITIONS OF AN INTERNAL CONTROL DEVICE FOR A GEARBOX

(30) Priorité: 23.07.2018 FR 1870856
(43) Date de publication de la demande: 02.06.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: GAILLIARD, Fabien, 92500 Rueil-Malmaison (FR)
(74) Mandataire: Renault Group
(86) Numéro de dépôt international: PCT/EP2019/064532
(87) Numéro de publication internationale: WO 2020/020521

(56) Documents cités:
- DE-A1-102014 218 495
- FR-A1- 2 902 853

## Description

La présente invention se rapporte à la commande interne des boîtes de vitesses à arbres parallèles.

Plus précisément, elle a pour objet une boîte de vitesses à arbre parallèles comprenant un dispositif de détection des positions d'une commande interne, le dispositif de détection comportant un organe de sélection rotatif qui porte une cible mobile, coopérant avec un capteur fixe sur la boîte, pour détecter la position de sélection de l'organe rotatif, parmi au moins trois positions angulaires de sélection distinctes.

Dans une boîte de vitesses à arbres parallèles, ou boîte de vitesses mécanique, l'engagement d'une vitesse est provoqué par le déplacement axial, d'un baladeur, qui vient rendre solidaire en rotation un pignon fou, et l'arbre autour duquel il tourne. L'engagement d'une vitesse s'effectue sur la ligne de vitesses sélectionnée.

Les moyens mécaniques de sélection et d'engagement des vitesses, sont généralement regroupés au sein d'un dispositif de commande interne, comportant par exemple un organe de sélection, tel qu'une clef de sélection et d'inter-verrouillage, qui tourne autour d'un axe de commande entre au moins deux positions de sélection, séparées par une ligne neutre.

Lorsque les changements de vitesses sont commandés par des actionneurs, il est nécessaire de connaître de manière précise, fiable, et répétitive, la position angulaire de la clef de sélection, et de détecter ses changements de position.

Si par exemple, deux lignes de vitesses sont espacées angulairement de 15 degrés, on doit pouvoir identifier dans cet espace trois plages angulaires consécutives de cinq degrés :
- une première position de sélection de ligne de vitesses entre 0 et 5 degrés,
- une position intermédiaire (neutre) entre 5 et 10 degrés, et
- une deuxième position de sélection de ligne de vitesse entre angulaire comprise entre 10 et 15 degrés.

Il est également connu, par le document DE102014218495 un axe de passage ou de sélection de vitesse, muni d'un capteur de position à cible mobile, qui ne permet toutefois pas d'assurer la détection d'un organe rotatif de sélection.

Pour détecter les positions angulaires d'une clef de sélection, on peut utiliser une cible magnétique portée par un porte-cible solidaire de la clef, et un capteur fixe, par exemple du type à effet Hall, agencé à l'extérieur du carter.

Un tel agencement est décrit et représenté dans le document FR-A1-3.044.065. Sa précision est comprise entre plus ou moins 2 degrés d'angle.

Pour détecter trois plages consécutives d'environ 5 degrés chacune, ce niveau de précision est insuffisant. Il peut aboutir à des refus de passage à proximité des positions à de transition entre les plages.

L'invention vise à obtenir l'information de position angulaire de l'organe de sélection, de manière précise, fiable et répétitive.

Dans ce but, elle propose une boîte de vitesses à arbre parallèles selon la revendication 1.

Des modes de réalisation avantageux de l'invention sont exposés dans les revendications dépendantes.

Selon l'invention, le capteur de position envoie à une unité de contrôle de la boîte de vitesses :
- un premier signal de sélection autorisant le passage des vitesses sur une première ligne de vitesses, lorsque le piston est complètement rétracté,
- un deuxième signal de détection, d'une position intermédiaire entre deux lignes de vitesses, lorsque le piston est à mi-course, et
- un troisième signal, de sélection autorisant le passage des vitesses sur une deuxième ligne de vitesses, lorsque le piston est complètement sorti.

La présente invention sera mieux comprise à la lecture de la description suivante d'un mode de réalisation non limitatif de celle-ci, en se reportant aux dessins annexés, sur lesquels :
[Fig. 1] est une vue en perspective, d'un dispositif de commande interne d'une boîte de vitesses, qui intègre un agencement de détection selon l'invention.
[Fig. 1A] est une première vue de détail de [Fig.1].
[Fig. 1B] est une deuxième vue de détail de [Fig.1].
[Fig. 2] montre la cote d'indexation du capteur et de la cible.
[Fig. 3A] illustre une première position de fonctionnement du dispositif.
[Fig. 3B] illustre une deuxième position de fonctionnement du dispositif.
[Fig. 3C] illustre une troisième position de fonctionnement du dispositif.

La commande interne 1 de boîte de vitesses à arbres parallèles, illustrée par les figures comporte un organe de sélection 2 mobile en rotation et au moins un organe de passage mobile en translation, ainsi qu'un dispositif de détection de positions conforme à l'invention.

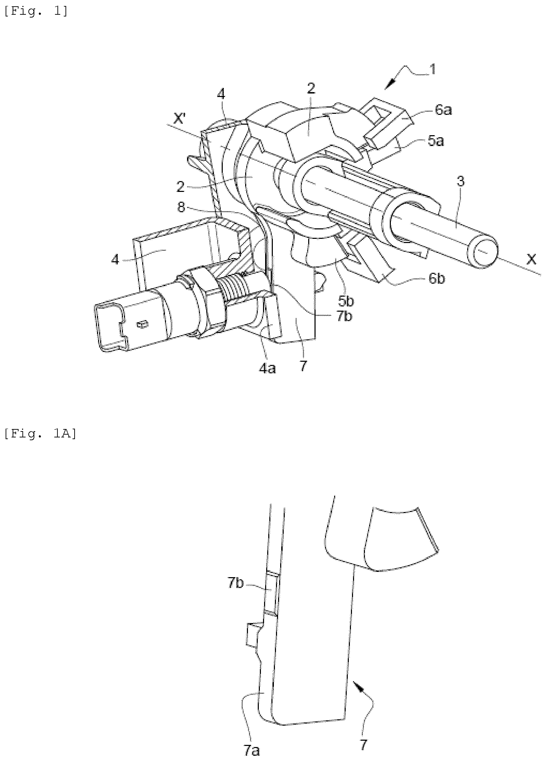

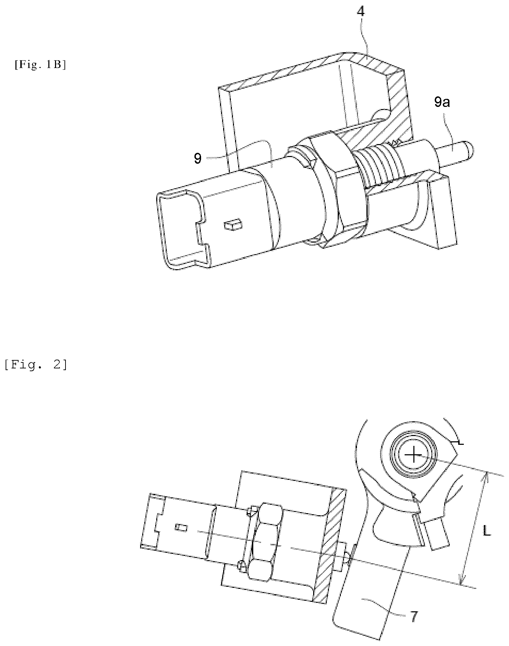

[Fig. 1] représente une commande interne 1 de boîte de vitesses à arbres parallèles, avec un organe rotatif de commande 2, ou clef de sélection, assurant la sélection des lignes de vitesses. L'organe rotatif 2 tourne dans les deux sens autour d'un axe de commande 3, (horizontal dans l'exemple de réalisation décrit), pour sélectionner ou désélectionner les lignes de vitesses. L'axe 3 est monté dans des portions opposées du carter de boîte 4. La clef 2 peut occuper plusieurs positions angulaires de sélection, autour de l'axe 3, y compris une position « neutre », où aucune ligne de vitesses n'est sélectionnée.

Le passage de différents rapports, dans une ligne de sélection préalablement sélectionnée, est assuré par l'un ou l'autre de deux doigts radiaux de passage 5a et 5b, qui tournent dans les deux sens et se déplacent axialement avec la clef 2. Dans une première position de sélection, le premier doigt 5a est reçu dans un crabot 6a relié, de manière connue, à une première ligne de pignons de la boîte de vitesses. Le deuxième doigt 5b est alors dégagé hors d'un deuxième crabot 6b lui-même relié, de manière connue, à une deuxième ligne de pignons de la boîte de vitesses.

Sous l'action d'un actionneur électromagnétique commandé (non représenté), l'organe 2 pivote angulairement depuis sa première position angulaire de sélection vers sa deuxième position angulaire de sélection. Le premier bras de passage 5a est alors dégagé du premier crabot, tandis que, le deuxième bras de passage 5b, s'engage est engagé dans le deuxième crabot 6b. Enfin, l'agencement peut comprendre une clef d'inter-verrouillage (non représentée) tournant avec la clef de sélection 2, qui comporte par exemple deux blocs de verrouillage (non représentés), dont chacun coopère alternativement avec son crabot associé pour le bloquer, lorsque la ligne de sélection correspondante n'est pas sélectionnée.

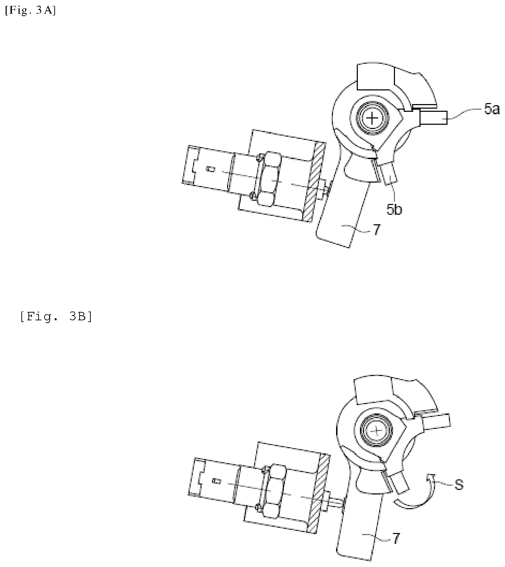

[Fig. 1] et [Fig. 3A] illustrent la première position angulaire de sélection A de la commande. Elle est déterminée par un bras radial 7, appartenant à la clef de sélection 2. Dans cette position, le bras 7 est en appui contre une butée 4a du carter 4.

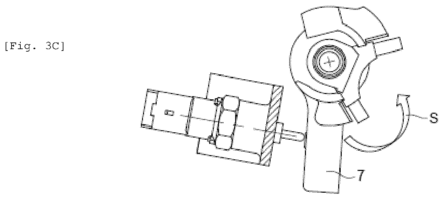

[Fig.3B] et [Fig. 3C] illustrent l'organe rotatif de sélection 2 qui est entraîné en rotation par l'actionneur dans le sens S. La clef 2 est rappelée élastiquement vers la position A par un moyen élastique de rappel 8, coopérant avec le bras 7, lorsqu'elle est entraînée en rotation par l'actionneur dans le sens S, à l'écart de la position A. Le moyen de rappel est constitué dans cet exemple, par un ressort à fil 8 entourant le bras 7.

[Fig. 3A] montre la position A. L'actionneur est au repos. L'organe rotatif 2 est dans une première position de sélection. [Fig. 3A] l'actionneur est commandé. Il provoque la rotation de l'organe 2 dans le sens S. [Fig. 3B], il est dans sa position angulaire intermédiaire B. [Fig. 3C], il est dans sa deuxième position angulaire de sélection.

Lorsque l'on interrompt la commande et l'alimentation électrique de l'actionneur, la clef 2 est rappelée élastiquement sous charge par le ressort de rappel 8, vers sa première position angulaire A.

Le dispositif de détection de positions de la commande interne 1, est associé à l'organe de sélection rotatif 2. Le bras 7 présente une face d'appui usinée 7a, portant la cible 7b. La cible 7b coopère avec un capteur 9 fixe sur la boîte, pour détecter la position de sélection de l'organe rotatif 2. La détection s'effectue parmi au moins trois positions angulaires de sélection distinctes. Le capteur 9, constitué notamment par un contacteur bi-fonction, est vissé dans le carter 4 fait face à la cible. Le capteur 9 comporte à son extrémité un piston 9a, avec une extrémité arrondie, qui vient prendre appui sur la face 7a au niveau de la cible 7b. Le piston 9a se rétracte sous la poussée de la cible 7b, sur une course linéaire où l'on peut identifier plusieurs portions adjacentes. Ces portions sont associées par l'unité de calcul de la commande, à des positions angulaires successives de sélection, de l'organe rotatif 2.

La course du piston 9a entre sa position rétractée et sa position étendue, comporte trois portions correspondant respectivement à une première position de sélection de ligne de vitesses (A), une position neutre(B) sans sélection de ligne de vitesses, et une deuxième position de sélection de ligne de vitesses (C).

[Fig. 3A], la clef 2 est représentée en position de sélection de la première ligne de vitesses. Le piston 9a est complètement rétracté. Lorsque le capteur 9 détecte la proximité de la face d'appui 7a, il envoie à l'unité de contrôle de la commande interne de vitesses, un premier signal pour autoriser le passage des vitesses de la première ligne.

[Fig.3B], la clef 2 est en position intermédiaire entre les deux lignes de vitesses. Le piston 9a est à mi-course. Lorsqu'il détecte la présence de la clef dans la partie intermédiaire de sa course, le capteur 9 envoie un deuxième signal à l'unité de contrôle, pour interdire tout passage de vitesses sur les deux lignes.

[Fig. 3C], l'organe de sélection 2, est en position pour engager la ligne de passage 2. Le piston 9a est totalement sorti, sans contact avec la face d'appui 7a. Le capteur 9 envoie un troisième signal, pour autoriser le passage des vitesses de la deuxième ligne.

Selon la présente invention, le capteur 9 envoie à une unité de contrôle les trois signaux suivants:
- un premier signal de sélection autorisant le passage des vitesses sur une première ligne de vitesses, lorsque le piston 9a est complètement rétracté,
- un deuxième signal de détection, d'une position intermédiaire entre deux lignes de vitesses lorsque le piston 9a est à mi-course, et
- un troisième signal, de sélection autorisant le passage des vitesses sur une deuxième ligne de vitesses, lorsque le piston 9a est complètement sorti.

Le troisième signal est émis de préférence, lorsque le piston 9a a perdu le contact avec la cible 7b.

Le deuxième signal interdit tout passage de vitesses sur les deux lignes de vitesses.

Le premier signal peut être émis uniquement lorsque piston 9a est complètement rétracté, et que le capteur 9 détecte la proximité de la cible 7ba.

La position exacte de la zone de contact entre le piston 9a et la face d'appui 7a sur le bras 5, est indiquée sur la figure 2, par la cote d'indexation L du capteur et de la cible. La cote L peut varier en fonction de l'implantation exacte du capteur 9 dans le carter 4, en fonction de contraintes, course du piston ou autres. Dans le mode de réalisation décrit, le contact intervient sur le bras 7 de la clef 2, servant au rappel en sélection de la commande. Toutefois, sans sortir du cadre de l'invention, elle peut être placée ailleurs, notamment sur un bras spécifique rajouté sur la clef. La cible peut être plane ou bombée, etc.

Le capteur 9 exerce sur l'organe rotatif de sélection 2 un effort résistant, par l'extrémité de son piston 9a. Cet effort varie avec la position du piston 9a. Comme indiqué plus haut, l'organe rotatif 2 est muni d'un élément de rappel élastique en sélection 8. Cet élément rappelle l'organe rotatif 2 vers le piston 9a, dont le dimensionnement et le tarage sont adaptés à l'effort résistant du piston le long de sa course de rétraction.

## Revendications

1. Boîte de vitesses à arbre parallèles comprenant un dispositif de détection de positions d'une commande interne (1), le dispositif de détection comportant un organe de sélection rotatif (2) qui porte une cible mobile (7b), coopérant avec un capteur (9) fixe sur la boîte pour détecter la position de sélection de l'organe rotatif parmi au moins trois positions angulaires distinctes de sélection, en outre le capteur (9) porte un piston (9a) se déplaçant sous la poussée de la cible (7b) sur une course de rétraction linéaire où sont identifiées plusieurs portions adjacentes correspondant aux positions angulaires successives de sélection, de l'organe rotatif (2), **caractérisé en ce que** la course du piston (9a) entre sa position étendue et sa position rétractée comportant trois portions correspondant respectivement à une première position de sélection de ligne de vitesses (A), une position neutre(B) sans sélection de ligne de vitesses, et une deuxième position de sélection de ligne de vitesses (C) et **en ce que** le capteur (9) envoie à une unité de contrôle de la boîte de vitesses :
- un premier signal de sélection autorisant le passage des vitesses sur une première ligne de vitesses, lorsque le piston (9a) est complètement rétracté,
- un deuxième signal de détection, d'une position intermédiaire entre deux lignes de vitesses lorsque le piston (9a) est à mi-course, et
- un troisième signal, de sélection autorisant le passage des vitesses sur une deuxième ligne de vitesses, lorsque le piston (9a) est complètement sorti.

2. Boîte de vitesses selon la revendication 1, **caractérisé en ce que** le piston (9a) du capteur (9) se rétracte sous la poussée de la cible (7b), en exerçant sur l'organe (2) un effort résistant par son extrémité.

3. Boîte de vitesses selon la revendication 2, caractérisé en ce l'organe rotatif (2) est muni d'un élément de rappel élastique en sélection (8) vers le piston (9a), dont le dimensionnement et le tarage sont adaptés à l'effort résistant du piston (9a) le long de sa course de rétraction.

4. Boîte de vitesses selon l'une des revendications précédentes, **caractérisé en ce que** la cible (7b) est portée par un bras de rappel en sélection (7) de l'organe rotatif (2).

5. Boîte de vitesses selon l'une des revendications précédentes, **caractérisé en ce que** le troisième signal est émis lorsque le piston (9a) a perdu le contact avec la cible (7b).

6. Boîte de vitesses selon la revendication précédente, **caractérisé en ce que** le premier signal est émis lorsque piston (9a) est complètement rétracté, et que le capteur (9) détecte la proximité de la cible (7b).

7. Boîte de vitesses selon la revendication 5, **caractérisé en ce que** le deuxième signal interdit tout passage de vitesses sur les deux lignes de vitesses.

8. Boîte de vitesses selon l'une des revendications précédentes, caractérisé elle comporte en outre au moins un organe de passage mobile en translation.

## Patentansprüche

1. Getriebe mit parallelen Wellen umfassend eine Vorrichtung zur Erfassung von Positionen einer internen Steuerungseinrichtung (1), wobei die Erfassungsvorrichtung ein Anwahldrehorgan (2) aufweist, das ein bewegliches Ziel (7b) trägt, das mit einem festen Sensor (9) auf dem Getriebe zusammenwirkt, um die Anwahlposition des Drehorgans aus wenigstens drei verschiedenen Anwahl-Winkelpositionen zu erfassen, wobei der Sensor (9) ferner einen Kolben (9a) trägt, der sich unter dem Schub des Ziels (7b) über einen linearen Einfahrhub verschiebt, wo mehrere benachbarte Abschnitte ermittelt sind, die den aufeinanderfolgenden Anwahl-Winkelpositionen des Drehorgans (2) entsprechen, **dadurch gekennzeichnet, dass** der Hub des Kolbens (9a) zwischen dessen ausgefahrenen und eingefahrenen Position drei Abschnitte aufweist, die einer ersten Schaltgassen-Anwahlposition (A), einer Neutralposition (B) ohne Schaltgassen-Anwahl bzw. einer zweiten Schaltgassen-Anwahlposition (C) entsprechen, und dadurch, dass der Sensor (9) Folgendes an eine Steuereinheit des Getriebes sendet:
- ein erstes Anwahlsignal, das den Wechsel der Gänge über eine erste Schaltgasse erlaubt, wenn der Kolben (9a) vollständig eingefahren ist,
- ein zweites Signal zur Erfassung einer Zwischenposition zwischen zwei Schaltgassen, wenn sich der Kolben (9a) auf der Mitte des Hubs befindet, und
- ein drittes Signal zur Anwahl, das den Wechsel der Gänge über eine zweite Schaltgasse erlaubt, wenn der Kolben (9a) vollständig ausgefahren ist.

2. Getriebe nach Anspruch 1, **dadurch gekennzeichnet, dass** der Kolben (9a) des Sensors (9) unter dem Schub des Ziels (7b) einfährt, wobei er über sein Ende eine Widerstandskraft auf das Organ (2) ausübt.

3. Getriebe nach Anspruch 2, **dadurch gekennzeichnet, dass** das Drehorgan (2) mit einem Element zur elastischen Rückholung bei der Anwahl (8) zum Kolben (9a) versehen ist, dessen Abmessung und Tarierung an die Widerstandskraft des Kolbens (9a) seinen Einfahrhub entlang angepasst sind.

4. Getriebe nach einem der vorhergehenden Ansprüche, **dadurch gekennzeichnet, dass** das Ziel (7b) von einem Arm zur Rückholung (7) des Drehorgans (2) bei der Anwahl getragen wird.

5. Getriebe nach einem der vorhergehenden Ansprüche, **dadurch gekennzeichnet, dass** das dritte Signal ausgesendet wird, wenn der Kolben (9a) den Kontakt zum Ziel (7b) verloren hat.

6. Getriebe nach dem vorhergehenden Anspruch, **dadurch gekennzeichnet, dass** das erste Signal ausgesendet wird, wenn der Kolben (9a) vollständig eingefahren ist, und dass der Sensor (9) die Nähe des Ziels (7b) erfasst.

7. Getriebe nach Anspruch 5, **dadurch gekennzeichnet, dass** das zweite Signal jeglichen Gangwechsel über die zwei Schaltgassen unterbindet.

8. Getriebe nach einem der vorhergehenden Ansprüche, **dadurch gekennzeichnet, dass** es ferner wenigstens ein translatorisch bewegliches Wechselorgan aufweist.

## Claims

1. Parallel-shaft gearbox comprising a device for detecting positions of an internal control device (1),the detecting device having a rotating selection member (2) which bears a mobile target (7b), cooperating with a sensor (9) that is fixed on the gearbox to detect the selection position of the rotating member from among at least three distinct angular selection positions, wherein, furthermore, the sensor (9) bears a piston (9a) that moves under the thrust of the target (7b) over a linear retraction travel where multiple adjacent portions corresponding to the successive angular selection positions of the rotating member (2) are identified, **characterized in that** the travel of the piston (9a) between its extended position and its retracted position comprises three portions corresponding respectively to a first gear line selection position (A), a neutral position (B) in which no line of gears is selected, and a second gear line selection position (C), and **in that** the sensor (9) sends to a control unit of the gearbox:
- a first, selection signal allowing gear switching on a first line of gears when the piston (9a) is completely retracted,
- a second signal, of detection of an intermediate position between two lines of gears when the piston (9a) is at mid-travel, and
- a third, selection signal allowing gear switching on a second line of gears when the piston (9a) is completely extended.

2. Gearbox according to Claim 1, **characterized in that** the piston (9a) of the sensor (9) retracts under the thrust of the target (7b), exerting by its end a resistance force on the member (2).

3. Gearbox according to Claim 2, **characterized in that** the rotating member (2) is provided with an elastic element (8) for return to selection toward the piston (9a), whose dimensions and preload are adapted to the resistance force of the piston (9a) along its retraction travel.

4. Gearbox according to one of the preceding claims, **characterized in that** the target (7b) is borne by a selection return arm (7) for the rotating member (2).

5. Gearbox according to one of the preceding claims, **characterized in that** the third signal is sent when the piston (9a) has lost contact with the target (7b).

6. Gearbox according to the preceding claim, **characterized in that** the first signal is sent when the piston (9a) is completely retracted, and the sensor (9) detects the proximity of the target (7b).

7. Gearbox according to Claim 5, **characterized in that** the second signal prevents any gear switching on the two lines of gears.

8. Gearbox according to one of the preceding claims, **characterized in that** it also has at least one switching member that is able to move in translation.
